# FASCICULE DE BREVET EUROPEEN

(11) **EP 1 445 153 B1**
(45) Date de publication et mention de la délivrance du brevet: **26.04.2006**
(21) Numéro de dépôt: 04290281.7
(22) Date de dépôt: 03.02.2004
(51) Int. Cl.: B60R 19/56, B60R 19/38

(54) **Véhicule équipé d'une barre anti-encastrement rétractable**
Fahrzeug mit einem einziehbaren Unterfahrschutzbalken
Vehicle with a retractable underrun protection bar

(30) Priorité: 04.02.2003 FR 0301299
(43) Date de publication de la demande: 11.08.2004
(73) Titulaire: POMMIER, 95310 Saint-Quen l'Aumone (FR)
(72) Inventeur: Froissard, Alain, 95110 Sannois (FR)
(74) Mandataire: Thinat, Michel

(56) Documents cités:
- DE-U- 7 510 537
- DE-U- 9 307 389
- DE-U- 9 419 691
- FR-A5- 2 035 181
- US-A- 3 608 943

## Description

L'invention concerne en général les véhicules automobiles équipés de barres anti-encastrement.

Plus précisément, l'invention concerne un véhicule automobile comprenant les caractéristiques de la revendication 1.

Un véhicule automobile comportant les caractéristiques du préambule de la revendication 1 est connu du document DE 75 10537U.

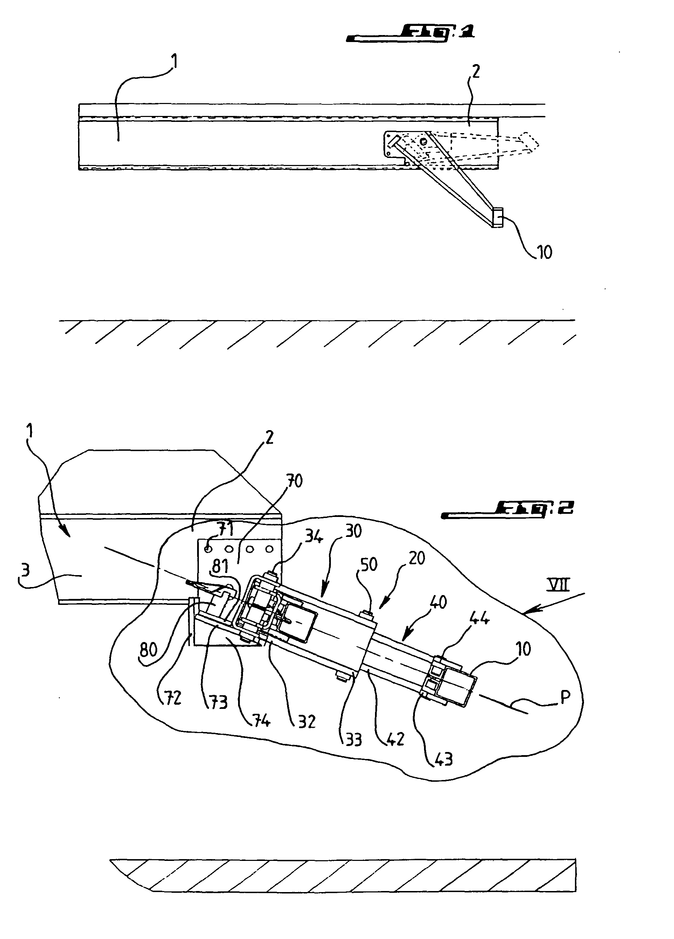

Des véhicules de ce type sont connus de l'art antérieur, et comprennent typiquement des barres montées pivotantes sur les longerons par l'intermédiaire de bras rigides. La barre passe de sa position inférieure à sa position supérieure en effectuant une rotation vers l'arrière et vers le haut autour d'un axe de rotation transversal, comme le montre la figure 1.

La barre, dans sa position supérieure, est alors gênante, par exemple pour décharger le véhicule par l'arrière, ou, quand le véhicule est un camion benne, pour vider la benne.

Dans ce contexte, la présente invention a pour but de pallier le défaut mentionné ci-dessus.

A cette fin, le dispositif de l'invention, par ailleurs conforme à la définition générique qu'en donne le préambule ci-dessus, est essentiellement caractérisé en ce que le déplacement de la barre anti-encastrement entre ses positions supérieure et inférieure correspond à un mouvement de translation dans un plan de référence.

Dans un mode de réalisation possible de l'invention, la barre anti-encastrement se rapproche des longerons en passant de la position inférieure à sa position supérieure.

Avantageusement, les moyens de liaison entre la barre anti-encastrement et les longerons comprennent des bras droit et gauche, ces bras comprenant chacun des tronçons avant et arrière mutuellement articulés, le tronçon avant étant également articulé à un longeron et le tronçon arrière étant également articulé à la barre anti-encastrement.

De préférence, les tronçons avant et arrière forment un angle ouvert l'un par rapport à l'autre dans la position inférieure de la barre anti-encastrement, et un angle fermé l'un par rapport à l'autre dans la position supérieure de la barre anti-encastrement.

Par exemple, les tronçons avant sont articulés sur les longerons par des axes avant perpendiculaires au plan de référence, les tronçons avant et arrière étant mutuellement articulés par des axes intermédiaires perpendiculaires au plan de référence, et les tronçons arrière étant articulés sur la barre anti-encastrement par des axes arrière perpendiculaires au plan de référence.

Avantageusement, les axes intermédiaires se déplacent latéralement vers l'extérieur du véhicule quand la barre anti-encastrement passe de sa position inférieure à sa position supérieure.

De préférence, les moyens de liaison entre la barre anti-encastrement et les longerons comprennent des moyens de verrouillage des tronçons avant dans les positions que ces tronçons occupent dans les positions inférieure et supérieure de la barre anti-encastrement.

Par exemple, les moyens de liaison entre la barre anti-encastrement et les longerons comprennent des organes sollicitant les tronçons arrière en rotation autour des axes arrière vers l'extérieur.

De préférence, les organes sollicitant les tronçons arrière en rotation sont deux vérins à gaz, chacun articulé par une première extrémité à un des axes intermédiaires, et par une seconde extrémité opposée à la première à la barre anti-encastrement, les vérins à gaz sollicitant l'axe intermédiaire et la barre dans le sens d'un écartement mutuel, la seconde extrémité du vérin de chaque bras étant décalée vers le milieu de la barre relativement à l'axe arrière correspondant .

Avantageusement, les tronçons avant sont des profilés en U présentant des rainures ouvertes vers le plan longitudinal médian du véhicule et dans lesquelles les tronçons arrière viennent se loger en position supérieure de la barre anti-encastrement.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue de côté d'un longeron et de la barre anti-encastrement d'un véhicule selon l'art antérieur,
- la figure 2 est une vue de côté d'un longeron, de la barre anti-encastrement et des bras de liaison d'un véhicule selon l'invention, la barre étant représentée dans ses deux positions, inférieure et supérieure,
- la figure 3 est une vue en perspective de la barre et des bras de liaison du véhicule de la figure 2, la barre étant représentée en position inférieure,
- la figure 4 est une figure similaire à la figure 3, la barre étant représentée dans une position intermédiaire dans laquelle le bras de liaison gauche est partiellement replié,
- la figure 5 est une figure similaire à la figure 3, la barre étant représentée dans une autre position intermédiaire dans laquelle le tronçon avant du bras de liaison gauche est verrouillé en position supérieure,
- la figure 6 est une figure similaire à la figure 3, la barre étant représentée dans sa position supérieure,
- la figure 7 est une vue agrandie du détail VII de la figure 2,
- la figure 8 est une vue en coupe longitudinale du bras et de la barre de la figure 7, considéré suivant l'incidence des flèches VIII de la figure 7, et
- la figure 9 est une vue en coupe de l'articulation avant, considérée suivant l'incidence des flèches IX de la figure 3.

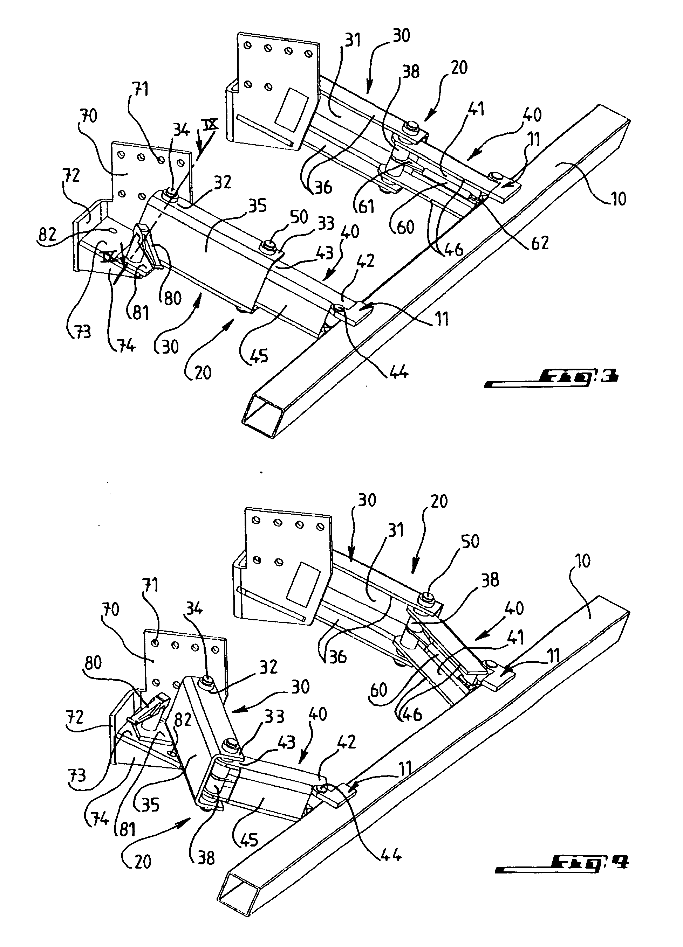

Le véhicule automobile représenté partiellement sur la figure 2 comprend deux longerons arrière 1 parallèles et longitudinaux, une barre anti-encastrement 10 transversale liée au deux longerons 1 et mobile relativement aux longerons 1 entre une position inférieure relativement plus basse et une position supérieure relativement plus haute, et des moyens de liaison entre la barre anti-encastrement 10 et les longerons 1.

Les longerons 1 sont disposés des deux côtés latéraux opposés du véhicule, symétriquement par rapport au plan longitudinal médian de ce véhicule.

Ce type de barre est généralement installé sur des véhicules industriels équipés de roues de grand diamètre et dont la caisse est située à une hauteur importante par rapport au sol relativement à une voiture de tourisme.

La barre anti-encastrement est un système de sécurité permettant d'éviter que les parties avant des voitures de tourisme, en cas de choc à l'arrière des véhicules industriels, viennent s'encastrer sous la caisse, et que la partie supérieure du véhicule impacte alors directement la caisse.

Dans sa position inférieure, la barre anti-encastrement 10 est située à un niveau intermédiaire entre la caisse et le sol et interdit aux voitures de tourisme de s'encastrer sous la caisse.

Selon l'invention, le déplacement de la barre anti-encastrement 10 entre ses positions supérieure et inférieure correspond à un mouvement de translation dans un plan de référence P.

Comme on le voit sur la figure 2, la barre anti-encastrement 10 est liée à des parties d'extrémités arrière respectives 2 des longerons 1. Elle se trouve, dans sa position inférieure, significativement plus bas et significativement plus à l'arrière que les parties d'extrémités arrière 2. Dans sa position supérieure, elle se trouve immédiatement en dessous et immédiatement derrière les parties d'extrémités arrière 2. La barre 10 se rapproche donc des longerons 1 en passant de la position inférieure à sa position supérieure.

Le plan de référence P est un plan transversal légèrement incliné par rapport à l'horizontale.

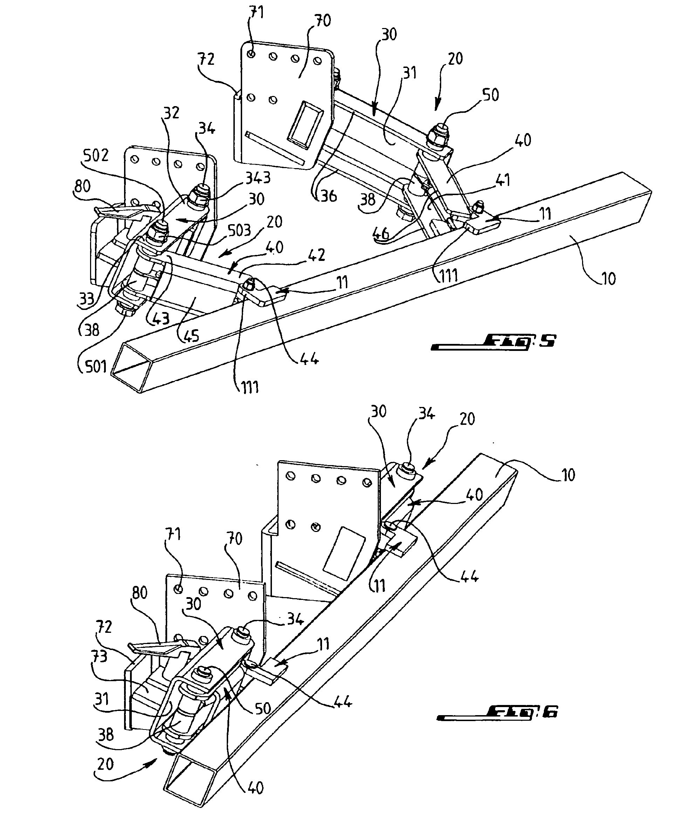

Comme le montre la figure 3, les moyens de liaison entre la barre anti-encastrement 10 et les longerons 1 comprennent des bras 20 droit et gauche, ces bras comprenant chacun des tronçons avant 30 et arrière 40 mutuellement articulés, le tronçon avant 30 étant articulé à la partie d'extrémité arrière 2 d'un longeron 1 et le tronçon arrière 40 étant articulé à la barre anti-encastrement 10.

Ces bras 20 sont mobiles entre une configuration déployée dans laquelle les tronçons avant et arrière 30 et 40 forment un angle ouvert l'un par rapport à l'autre, et une configuration repliée dans laquelle ils forment un angle fermé l'un par rapport à l'autre.

Plus précisément, les tronçons avant et arrière 30 et 40, dans la configuration déployée, sont alignés dans le prolongement l'un de l'autre et s'étendent dans un plan vertical longitudinal, et, dans la configuration repliée, les tronçons avant et arrière 30 et 40 sont disposés le long l'un de l'autre et s'étendent dans une direction transversale.

La configuration déployée des bras 20 correspond à la position inférieure de la barre anti-encastrement 10, et la configuration repliée à la position supérieure.

Les tronçons avant 30 et arrière 40 sont des profilés en U, comprenant des dos avant et arrière respectifs 35 et 45 et des bords dressés avant et arrière respectifs 36 et 46 se dressant des deux côtés opposés du dos correspondant. Le dos et les bords définissent des rainures avant et arrière 31 et 41 ouvertes vers le plan longitudinal médian du véhicule en configuration déployée des bras 20.

Les tronçons avant 30 présentent chacun une extrémité d'articulation avant 32 articulée sur le longeron 1 correspondant par un axe avant 34 s'étendant perpendiculairement au plan de référence P.

Chaque tronçon avant 30 présente également une extrémité intermédiaire avant 33 opposée à l'extrémité d'articulation avant 32 articulée par un axe intermédiaire 50 à une extrémité intermédiaire arrière 43 du tronçon arrière 40. L'axe intermédiaire 50 s'étend perpendiculairement au plan de référence P.

Enfin, chaque tronçon arrière 40 présente une extrémité d'articulation arrière 42 opposée à l'extrémité intermédiaire arrière 43 et articulée sur la barre anti-encastrement 10 par un axe arrière 44 s'étendant perpendiculairement au plan de référence.

On comprend donc bien que les bras 20 débattent dans le plan de référence P en passant de leur configuration déployée à leur configuration repliée.

Plus précisément, les axes intermédiaires 50 des deux bras 20 se déplacent latéralement vers l'extérieur du véhicule, en s'éloignant l'un de l'autre, quand la barre anti-encastrement 10 passe de sa position inférieure à sa position supérieure.

Les tronçons avant 30 sont liés aux longerons 1 par l'intermédiaire de platines 70 rigidement fixées sur des faces latérales extérieures 3 des longerons 1. Ces platines 70 sont des plaques verticales longitudinales et sont percées de trous 71 par lesquels elles sont vissées sur les longerons 1. Elles peuvent également être fixées par d'autres moyens tels que le soudage.

Une plaque de renfort 72 s'étend à partir d'un bord avant opposé à la barre anti-encastrement 10 de chacune des platines 70. Ces plaques sont venues de matière ou soudés sur les platines 70 et s'étendent latéralement vers l'extérieur du véhicule, perpendiculairement aux platines 70.

Deux plaques supports 73 sont chacune rigidement fixée par deux bords mutuellement perpendiculaires à l'une des platines 70 et à la plaque de renfort 72 correspondante. Ces plaques de support 73 s'étendent dans le plan de référence P et sont fixées par des moyens connus à la platine 70 et à la plaque 72, par exemple par soudage.

Un gousset 74 s'étendant dans un plan vertical longitudinal rigidifie chaque plaque support 73. Ce gousset présente la forme d'un triangle rectangle et est rigidement fixé par son hypothénuse sur la plaque support 73 et par un petit côté sur la plaque de renfort 72.

L'extrémité d'articulation avant 32 du tronçon avant 30 repose sur la plaque support 73 par un de ses bords dressé 36.

Comme le montre la figure 9, les deux bords dressés 36 de l'extrémité d'articulation avant 32 sont traversés par deux fûts cylindriques avant 37 respectifs alignés l'un avec l'autre, et solidaires des bords dressés 36.

Par ailleurs, une pièce massive de guidage 75 est rigidement fixée à la platine 70 et engagée dans la rainure avant 31 au niveau de l'extrémité d'articulation avant 32.

Cette pièce présente un orifice cylindrique, et vient s'intercaler exactement entre les deux fûts cylindriques avant 37, de telle sorte que l'orifice de la pièce massive et les fûts avant soient parfaitement alignés et forment un conduit cylindrique continu dans lequel l'axe avant 34 est engagé.

On notera que les fûts avant 37 présentent des extrémités en saillie par rapport aux bords dressés 36 au-dessus et au-dessous du tronçon avant 34, l'extrémité faisant saillie au-dessous étant engagée dans un orifice de la plaque support 73 correspondant et affleurant à une face de la plaque support 73 opposée au tronçon avant 30.

L'axe avant 34 est constitué d'une vis présentant une tête avant 341 élargie et une extrémité filetée 342 opposée à la tête 341.

Comme le montre la figure 9, la tête 341 est en appui sur la face de la plaque support 73 opposée au tronçon avant 30, l'axe avant 34 traversant successivement la plaque support 73, un fût avant 37, la pièce massive 75, le deuxième fût avant 37, et l'extrémité filetée 342 faisant saillie au-dessus de ce dernier fût avant 37. Un écrou 343 est vissé sur l'extrémité filetée 342 et vient porter par l'intermédiaire d'une rondelle 344 sur le fût.

L'axe avant 34 est libre en rotation relativement à la pièce massive 75.

Le tronçon arrière 40 est formé d'un profilé de largeur inférieure à la largeur du tronçon avant 30, la largeur s'entendant comme l'écartement entre les bords dressés.

L'extrémité intermédiaire arrière 43 est engagée dans la rainure avant 31, à l'extrémité intermédiaire avant 33.

Les deux bords dressés 36 de l'extrémité intermédiaire avant 33 sont traversés par deux fûts cylindriques intermédiaires 38 respectifs alignés l'un avec l'autre, et solidaires des bords dressés 36.

Ces fûts sont pratiquement en contact l'un avec l'autre par des extrémités respectives au centre de la rainure 31, seul un léger espace subsistant entre ces extrémités.

L'axe intermédiaire 50 est lui aussi constitué d'une vis présentant une tête intermédiaire 501 élargie et une extrémité filetée intermédiaire 502 opposée à la tête 501.

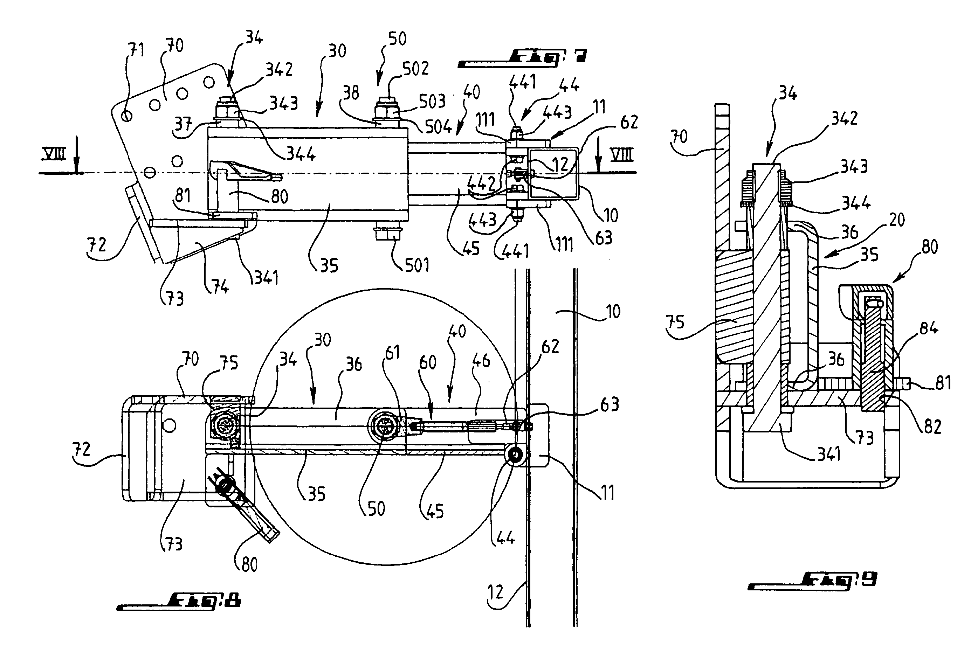

Comme le montre par exemple la figure 5, la tête 501 est en appui sur une face inférieure du bord dressé 36 opposée au tronçon arrière 40, l'axe intermédiaire 50 traversant successivement les deux fûts intermédiaires 38, et l'extrémité filetée 502 faisant saillie au-dessus de ce dernier fût intermédiaire 38. Un écrou intermédiaire 503 est vissé sur l'extrémité filetée 502 et vient porter par l'intermédiaire d'une rondelle intermédiaire 504 sur le fût.

Les bords dressés de l'extrémité intermédiaire arrière 43 sont traversées par les fûts intermédiaires 38 et libres en rotation par rapport à ces fûts.

Les deux extrémités d'articulation arrière 42 sont chacune articulée sur une chape 11 rigidement fixée sur la barre anti-encastrement 10 par des moyens connus, par exemple par soudage. La chape 11 comprend deux plaques 111 fixées sur des faces supérieure et inférieure opposées de la barre 10 et comprenant des parties faisant saillie vers le tronçon arrière 40 par rapport à la barre. Ces deux parties s'étendent en vis-à-vis l'une de l'autre, et l'extrémité d'articulation arrière 42 est engagée entre elles.

L'axe arrière 44 est en pratique composé de deux vis 441 alignées, chacune traversant un bord dressé 46 de l'extrémité d'articulation arrière et une des plaques 111. Le bord dressé et la plaque sont pris entre une tête 442 de la vis 441 et un écrou 443 vissé sur l'extrémité de la vis opposée à la tête.

Les moyens de liaison entre la barre anti-encastrement 10 et les longerons 1 comprennent des organes sollicitant les tronçons arrière 40 en rotation autour des axes arrière 44 vers l'extérieur.

Ces organes sont deux vérins à gaz 60, un sur chaque bras 20, chacun étant articulé par une première extrémité 61 à un des axes intermédiaires 50, et à une seconde extrémité 62 opposée à la première à la barre anti-encastrement 10.

La première extrémité 61 est conformée en anneau et est traversée par l'axe intermédiaire 50. Elle est disposée entre les deux fûts intermédiaires 38 et est libre en rotation à la fois relativement à l'axe intermédiaire 50 et aux fûts intermédiaires 38.

La seconde extrémité 62 est articulée dans une autre chape 63 solidaire d'une face avant 12 de la barre anti-encastrement 10 tournée vers le tronçon arrière 40. Cette autre chape 63 comprend un axe d'articulation de la seconde extrémité 62 s'étendant perpendiculairement au plan de référence P, de telle sorte que le vérin peut débattre dans le plan P.

On notera que la seconde extrémité 62 du vérin de chaque bras est légèrement décalée vers le milieu de la barre 10 relativement à l'axe arrière 44 correspondant .

Les vérins à gaz 60 s'étendent parallèlement au tronçon arrière 40 en configuration déployée des bras 20, l'autre chape 63 étant alors située exactement dans le prolongement du bras. Le vérin est alors à l'état comprimé et sollicite l'axe intermédiaire 50 et la barre 10 dans le sens d'un écartement mutuel. Il crée ainsi un moment de rotation autour de l'axe arrière 44 qui tend à écarter l'axe intermédiaire 50 vers l'extérieur.

Enfin, on notera que les moyens de liaison entre la barre anti-encastrement 10 et les longerons 1 comprennent des moyens de verrouillage des tronçons avant 30 dans les positions que ces tronçons occupent dans les positions inférieure et supérieure de la barre anti-encastrement 10.

Ces moyens de verrouillage comprennent pour chaque bras 20 une plaque pivotante 81 solidaire du tronçon avant 30 et se déplaçant sur la plaque support 30 quand le tronçon avant 30 pivote autour de l'axe avant 34, et une poignée 80 montée sur la plaque pivotante 81.

La poignée 80 peut adopter sélectivement une position de verrouillage dans laquelle une tige 84, représentée sur la figure 9, fait saillie sous la plaque pivotante, et une position de libération dans laquelle la tige 84 est rétractée à l'intérieur de la poignée et ne fait pas saillie sous la plaque pivotante 81.

La plaque support 73 est percée de deux trous de verrouillage 82 à des endroits choisis de telle sorte que la tige 84 de la poignée vienne s'engager dans ces trous quand la poignée 80 est en position de verrouillage et quand le tronçon avant 30 est respectivement dans des positions correspondant aux positions inférieure et supérieure de la barre anti-encastrement 10.

Le tronçon avant 30 est ainsi verrouillé en position. On notera que le tronçon arrière 40 reste libre relativement au tronçon avant 30.

On va maintenant décrire la séquence d'opérations à réaliser pour faire passer la barre de sa position inférieure à sa position supérieure et réciproquement.

On part de la situation dans laquelle la barre est dans sa position inférieure, les deux tronçons avant 30 étant verrouillés. La barre ne peut pas bouger dans cette configuration. L'opérateur déverrouille d'abord un des deux tronçons avant, par exemple le gauche comme le montre la figure 4, et fait remonter le côté gauche de la barre. Le bras gauche 20 se replie alors, ce mouvement étant assisté par le vérin à gaz 60 correspondant. On notera que le tronçon avant 30 du bras droit 20, toujours verrouillé, ne bouge pas, mais que le tronçon arrière 40 du bras droit pivote vers l'intérieur autour de son axe intermédiaire 50.

L'opérateur continue à replier le bras gauche 20 en faisant remonter la barre jusqu'à ce que le tronçon avant 30 soit en bout de course, c'est-à-dire dans la position qu'il occupera dans la position supérieure de la barre anti-encastrement 10. L'opérateur verrouille alors le tronçon avant 30 en position. Cette situation est illustrée sur la figure 5. On notera que le tronçon arrière 40 du bras gauche n'est pas entièrement replié dans la rainure 31 du tronçon avant 30.

L'opérateur déverrouille alors le tronçon avant 30 du bras droit 20 et fait remonter le côté droit de la barre jusqu'à ce que ce bras soit entièrement replié. Parallèlement, le tronçon arrière 40 du bras gauche se replie complètement contre le tronçon avant 30. L'opérateur verrouille alors le tronçon avant 30 du bras droit. On obtient ainsi la position de la figure 6. La barre est bloquée dans cette position.

Le passage de la barre anti-encastrement 10 de sa position supérieure à sa position inférieure se fait suivant la séquence exactement inverse.

On notera enfin que l'angle d'inclinaison du plan de référence P relativement à l'horizontale est choisi au cas par cas en fonction du type et de la taille du véhicule.

## Revendications

1. Véhicule automobile comprenant deux longerons arrière (1) sensiblement longitudinaux, une barre anti-encastrement (10) transversale liée au deux longerons (1) et mobile relativement aux longerons (1) entre une position inférieure relativement plus basse et une position supérieure relativement plus haute, et des moyens de liaison entre la barre anti-encastrement (10) et les longerons (1) comprenant des bras droit et gauche (20), le déplacement de la barre anti- encastrement (10) entre ses positions supérieure et inférieure correspondant à un mouvement de translation dans un plan de référence (P), **caractérisé en ce que** ces bras comprennent chacun des tronçons avant et arrière (30, 40) mutuellement articulés par des axes intermédiaires (50), le tronçon avant (30) est également articulé à un longeron (1) et le tronçon arrière (40) est également articulé à la barre anti-encastrement (10), et **en ce que** les axes intermédiaires (50) se déplacent latéralement vers l'extérieur du véhicule quand la barre anti-encastrement (10) passe de sa position inférieure à sa position supérieure.

2. Véhicule selon la revendication 1, **caractérisé en ce que** la barre anti-encastrement (10) se rapproche des longerons (1) en passant de la position inférieure à sa position supérieure.

3. Véhicule selon la revendication 1 ou 2, **caractérisé en ce que** les tronçons avant et arrière (30, 40) forment un angle ouvert l'un par rapport à l'autre dans la position inférieure de la barre anti-encastrement (10), et un angle fermé l'un par rapport à l'autre dans la position supérieure de la barre anti-encastrement (10).

4. Véhicule selon l'une quelconque des revendications 1 à 3, **caractérisé en ce que** les moyens de liaison entre la barre anti-encastrement (10) et les longerons (1) comprennent des moyens de verrouillage des tronçons avant (30) dans les positions que ces tronçons occupent dans les positions inférieure et supérieure de la barre anti-encastrement (10).

5. Véhicule selon l'une quelconque des revendications 1 à 4, **caractérisé en ce que** les tronçons avant (30) sont articulés sur les longerons (1) par des axes avant (34) perpendiculaires au plan de référence (P), les tronçons arrière (40) étant articulés sur la barre anti-encastrement (10) par des axes arrière (44) perpendiculaires au plan de référence (P), les axes intermédiaires (50) étant également perpendiculaires au plan de référence (P).

6. Véhicule selon la revendication 5, **caractérisé en ce que** les moyens de liaison entre la barre anti-encastrement (10) et les longerons (1) comprennent des organes sollicitant les tronçons arrière (40) en rotation autour des axes arrière (44) vers l'extérieur.

7. Véhicule selon la revendication 6, **caractérisé en ce que** les organes sollicitant les tronçons arrière (40) en rotation sont deux vérins à gaz (60), chacun articulé par une première extrémité (61) à un des axes intermédiaires (50), et par une seconde extrémité (62) opposée à la première à la barre anti-encastrement (10), les vérins à gaz (60) sollicitant l'axe intermédiaire (50) et la barre dans le sens d'un écartement mutuel, la seconde extrémité (62) du vérin (60) de chaque bras étant décalée vers le milieu de la barre anti-encastrement (10) relativement à l'axe arrière (44) correspondant.

8. Véhicule selon l'une quelconque des revendications précédentes, **caractérisé en ce que** les tronçons avant (30) sont des profilés en U présentant des rainures (31) ouvertes vers le plan longitudinal médian du véhicule et dans lesquelles les tronçons arrière (40) viennent se loger en position supérieure de la barre anti-encastrement (10).

## Patentansprüche

1. Kraftfahrzeug umfassend zwei im Wesentlichen langgestreckte hintere Längsträger (1), einen querliegenden Unterfahrschutzbalken (10), der mit den beiden Längsträgern (1) verbunden ist und relativ zu den Längsträgern (1) beweglich ist zwischen einer unteren Position, die relativ tiefer ist und einer oberen Position, die relativ höher ist, und Verbindungsmitteln zwischen dem Unterfahrschutzbalken (10) und den Längsträgern (1) umfassend rechte und linke Arme (20), wobei die Verschiebung des Unterfahrschutzbalkens (10) zwischen seiner oberen und unteren Position einer Translationsbewegung in einer Referenzebene (P) entspricht, **dadurch gekennzeichnet, dass** jeder dieser Arme vordere und hintere Abschnitte (30, 40) umfasst, die durch Zwischenachsen (50) gelenkig miteinander verbunden sind, der vordere Abschnitt (30) gleichermaßen mit einem Längsträger (1) gelenkig verbunden ist und der hintere Abschnitt (40) gleichermaßen mit dem Unterfahrschutzbalken (10) verbunden ist, und **dadurch**, dass die Zwischenachsen (50) sich seitlich zur Außenseite des Fahrzeugs verschieben, wenn der Unterfahrschutzbalken (10) von seiner unteren Position in die obere Position wechselt.

2. Fahrzeug nach Anspruch 1, **dadurch gekennzeichnet, dass** der Unterfahrschutzbalken (10) beim Wechseln von der unteren Position in die obere Position sich den Längsträgern (1) nähert.

3. Fahrzeug nach Anspruch 1 oder 2, **dadurch gekennzeichnet, dass** die vorderen und hinteren Abschnitte (30, 40) in der unteren Position des Unterfahrschutzbalkens (10) zueinander einen offenen Winkel bilden und in der oberen Position des Unterfahrschutzbalkens (10) einen geschlossenen Winkel zueinander bilden.

4. Fahrzeug nach einem der Ansprüche 1 bis 3, **dadurch gekennzeichnet, dass** die Verbindungsmittel zwischen dem Unterfahrschutzbalken (10) und den Längsträgern (1) Verriegelungsmittel der vorderen Abschnitte (30) in den Positionen, die die Abschnitte in der unteren und oberen Position des Unterfahrschutzbalkens (10) einnehmen, umfassen.

5. Fahrzeug nach einem der Ansprüche 1 bis 4, **dadurch gekennzeichnet, dass** die vorderen Abschnitte (30) auf den Längsträgern (1) durch vordere Achsen (34) senkrecht zur Referenzebene (P) gelenkig angebracht sind, wobei die hinteren Abschnitte (40) auf dem Unterfahrschutzbalken (10) durch hintere Achsen (44) senkrecht zur Referenzebene (P) gelenkig angebracht sind, wobei die Zwischenachsen (50) gleichermaßen senkrecht zur Referenzebene (P) sind.

6. Fahrzeug nach Anspruch 5, **dadurch gekennzeichnet, dass** die Verbindungsmittel zwischen dem Unterfahrschutzbalken (10) und den Längsträgern (1) Organe umfassen, die die hinteren Abschnitte (40) in Rotation um hintere Achsen (44) nach außen belasten.

7. Fahrzeug nach Anspruch 6, **dadurch gekennzeichnet, dass** die Organe, die die hinteren Abschnitte (40) in Rotation belasten, zwei Gaszylinder (60) sind, deren jeder mit einem ersten Ende (61) mit einer der Zwischenachsen (50) gelenkig verbunden ist, und mit einem zweiten Ende (62) gegenüberliegend zum ersten mit dem Unterfahrschutzbalken (10), wobei die Gaszylinder (60) die Zwischenachse (50) und den Balken in Richtung eines Abstands zueinander belasten, wobei das zweite Ende (62) des Zylinders (60) jedes Arms zur Mitte des Unterfahrschutzbalkens (10) relativ zur entsprechenden hintere Achse (44) versetzt ist.

8. Fahrzeug nach einem der vorhergehenden Ansprüche, **dadurch gekennzeichnet, dass** die vorderen Abschnitte (30) U-Profile sind, die zur Mittellängsebene des Fahrzeugs offene Nuten (31) aufweisen und in die sich die hinteren Abschnitte (40) in der oberen Position des Unterfahrschutzbalkens (10) einsetzen.

## Claims

1. Automotive vehicle comprising two substantially longitudinal rear side rails (1), a transverse underrun protection bar (10) connected to the two side rails (1) and movable relative to the side rails (1) between a relatively lower low position and a relatively higher high position and means for connecting the underrun protection bar (10) and the side rails (1) comprising right and left arms (20), the displacement of the underrun protection bar (10) between its upper and lower positions corresponding to a translatory motion in a reference plane (P), **characterised in that** these arms each comprise front and rear sections (30, 40) articulated to one another by intermediate shafts (50), the front section (30) is also articulated to a side rail (1) and the rear section (40) is also articulated to the underrun protection bar (10) and **in that** the intermediate shafts (50) are moved laterally toward the outside of the vehicle when the underrun protection bar (10) passes from its lower position to its upper position.

2. Vehicle according to claim 1, **characterised in that** the underrun protection bar (10) moves closer to the side rails (1) when passing from the lower position to its upper position.

3. Vehicle according to claim 1 or 2, **characterised in that** the front and rear sections (30, 40) form an open angle relative to one another in the lower position of the underrun protection bar (10) and a closed angle relative to one another in the upper position of the underrun protection bar (10).

4. Vehicle according to any one of claims 1 to 3, **characterised in that** the means for connecting the underrun protection bar (10) and the side rails (1) comprise means for locking the front sections (30) in the positions occupied by the sections in the lower and upper positions of the underrun protection bar (10).

5. Vehicle according to any one of claims 1 to 4, **characterised in that** the front sections (30) are articulated on the side rails (1) by front shafts (34) perpendicular to the reference plane (P), the rear sections (40) being articulated on the underrun protection bar (10) by rear shafts (44) perpendicular to the reference plane (P), the intermediate shafts (50) also being perpendicular to the reference plane (P).

6. Vehicle according to claim 5, **characterised in that** the means for connecting the underrun protection bar (10) and the side rails (1) comprise members urging the rear sections (40) in rotation about the rear shafts (44) toward the outside.

7. Vehicle according to claim 6, **characterised in that** the members urging the rear sections (40) in rotation are two gas struts (60), each articulated at one end (61) to one of the intermediate shafts (50) and at a second end (62) opposing the first to the underrun protection bar (10), the gas struts (60) urging the intermediate shaft (50) and the bar in the direction of mutual separation, the second end (62) of the strut (60) of each arm being offset toward the centre of the underrun protection bar (10) relative to the corresponding rear shaft (44).

8. Vehicle according to any one of the preceding claims, **characterised in that** the front sections (30) are U-shaped sections having channels (31) which are open toward the median longitudinal plane of the vehicle and in which the rear sections (40) are housed in the upper position of the underrun protection bar (10).
